# FASCICULE DE BREVET EUROPEEN

(11) **EP 0 493 998 B1**
(45) Date de publication et mention de la délivrance du brevet: **08.02.1995**
(21) Numéro de dépôt: 91403407.9
(22) Date de dépôt: 16.12.1991
(51) Int. Cl.: B64D 1/22

(54) **Installation de cordage sur hélicoptère**
Seilanlage auf einem Hubschrauber
Rope installation on an helicopter

(30) Priorité: 18.12.1990 FR 9015834
(43) Date de publication de la demande: 08.07.1992
(73) Titulaire: AEROSPATIALE Société Nationale Industrielle, 75781 Paris Cédex 16 (FR)
(72) Inventeur: Ferrier, Jean-Jacques, F-13880 Vecaux (FR)
(74) Mandataire: Poulin, Gérard

(56) Documents cités:
- US-A- 3 852 854
- US-A- 4 061 103
- US-A- 4 770 373

## Description

L'invention concerne une installation de cordage sur hélicoptère, permettant d'accrocher, à l'intérieur d'un hélicoptère, au moins une corde destinée à la descente de personnel d'intervention rapide au sol depuis cet hélicoptère, alors que celui-ci est en vol stationnaire à une attitude faible, voisine de la longueur de la ou desdites cordes.

Lorsqu'il est nécessaire d'amener du personnel d'intervention sur un champ d'action hostile interdisant l'atterrissage d'un hélicoptère ou le vol stationnaire de celui-ci à proximité immédiate du sol, on a parfois recours à une installation de cordage sur hélicoptère dite "d'hélicordage". Cette installation permet au personnel d'intervention de se laisser glisser jusqu'au sol depuis un hélicoptère en vol stationnaire à une altitude d'environ 30 m au-dessus du sol. Une telle opération peut notamment être nécessaire pour intervenir sur un immeuble en flammes, sur un groupe de terroristes, etc..

L'installation utilisée jusqu'à présent à cet effet comprend le plus souvent une poutre transversale rigide, fixée sur le plafond de l'hélicoptère et sur laquelle sont fixées de façon non largable des cordes le long desquelles le personnel d'intervention, équipé d'un dispositif spécial, se laisse glisser jusqu'au sol.

Lorsqu'il se trouve en vol stationnaire pendant la descente du personnel d'intervention, l'hélicoptère est particulièrement vulnérable. Il est donc souhaitable qu'il puisse s'éloigner aussi rapidement que possible de la zone d'intervention dès que la descente du personnel est terminée. Cependant, cet éloignement rapide est rendu difficile par les cordes non largables qui pendent sous l'appareil et risquent de se prendre dans les obstacles dépassant du sol (poteaux, fils électriques, grues) ou dans les rotors de l'appareil lui-même et en particulier dans le rotor arrière.

L'invention a précisément pour objet une installation de cordage sur hélicoptère dont la conception originale permet à l'hélicoptère de s'éloigner très rapidement de la zone d'action dès que le dernier homme a atteint le sol.

Conformément à l'invention, ce résultat est obtenu au moyen d'une installation de cordage sur hélicoptère, destinée à la descente vers le sol de personnel d'intervention, caractérisée par le fait qu'elle comprend un ensemble mécanique autonome intégré à un socle, lui-même fixé de façon amovible à un élément structural interne de la cabine de l'hélicoptère, en regard d'une ouverture latérale et comportant :
- des moyens d'accrochage rapide d'au moins un anneau solidaire de l'extrémité supérieure d'une corde ;
- des moyens de largage instantané commandé de chaque anneau,
les moyens d'accrochage rapide comprenant au moins un verrou d'accrochage comportant :
- un corps apte à être fixé sur le socle ;
- une fente formée dans ce corps et dont une extrémité ouverte est apte à être tournée vers l'ouverture latérale de l'hélicoptère, pour recevoir l'anneau d'extrémité d'une corde sortant par ladite ouverture ;
- une gâche montée pivotante sur le corps par un premier axe, de façon à pouvoir occuper une position fermée dans laquelle la gâche, en appui sur une partie fixe du verrou, obture l'extrémité ouverte de la fente et une position ouverte, commandée, dans laquelle cette extrémité ouverte est dégagée, le bord de la gâche tournée vers l'extérieur de la fente étant conformé de telle sorte que l'anneau d'extrémité de la corde peut être introduit dans la fente en déplaçant la gâche à l'encontre de moyens élastiques, qui maintiennent normalement la gâche dans sa position fermée ; et
- un loquet monté pivotant sur le corps par un deuxième axe et comportant une surface de came qui coopère avec une surface de came complémentaire formée sur la gâche de telle sorte que, sous la rotation du loquet solidaire en rotation d'un levier de commande de largage, formant les moyens de largage, la gâche pivote de sa position de fermeture vers sa position d'ouverture et libère l'anneau.

Grâce à une telle installation, toutes les cordes peuvent être larguées instantanément par le chef de mission resté à bord de l'hélicoptère, dès que tous les hommes ont atteint le sol.

Avantageusement, ledit organe est commandé par les moyens de largage de façon à pouvoir occuper une première position de verrouillage de sécurité de la gâche dans sa position fermée, une deuxième position dans laquelle la sécurité de la gâche est effacée, ladite gâche occupant toujours sa position fermée, et une troisième position dans laquelle la gâche est en position ouverte. La deuxième position permet notamment l'introduction de l'anneau d'extrémité de la corde à l'intérieur de la fente.

De préférence, la gâche est montée pivotante sur le corps de verrou par un premier axe qui est situé à proximité d'une ligne d'application d'efforts de l'anneau sur la gâche, qui est sensiblement la direction de l'extrémité de la corde reliée à l'anneau lorsque ladite corde est tendue par une charge qu'elle supporte. L'application d'un effort selon cette ligne tend donc à faire pivoter la gâche vers sa position de fermeture. Dans le cas où la direction de la corde tendue s'écarterait de ladite ligne, la gâche ne pourrait cependant pas s'ouvrir sous les sollicitations de la corde chargée du fait que l'effort exercé par l'anneau sous la gâche ne peut en aucun cas solliciter celle-ci dans le sens de l'ouverture. Par ailleurs, le moment exercé par l'anneau sur la gâche est siffisamment faible pour qu'une rotation de cette dernière à l'encontre, d'une part, des efforts de frottement de l'anneau sur la gâche et, d'autre part, desdits moyens élastiques maintenant normalement la gâche dans sa position fermée, puisse être commandée aisément même si la corde est tendue de façon exagérée, par exemple en étant accrochée sur un obstacle au sol. Enfin la gâche comporte un bossage formant butée de sécurité, lequel bossage, venant en appui sur une partie fixe du corps de verrou, interdit toute rotation de la gâche dans le sens de sa fermeture au-delà de la position dans laquelle la gâche obture complètement la fente.

Le loquet, monté pivotant sur le corps par le deuxième axe, comportant une surface de came qui comprend une partie cylindrique centrée sur le premier axe et a la forme d'une dent d'engrenage apte à coopérer avec une surface de came complémentaire de la gâche, ladite surface étant en forme de denture.

De préférence, le loquet porte un élément de verrouillage qui interdit, dans la première position du loquet, toute rotation de la gâche dans le sens de son ouverture, la surface de came en forme de dent d'engrenage étant alors, pour l'essentiel, écartée de la surface de came en forme de denture. Dans la deuxième position du loquet, l'élément de verrouillage libére la gâche en rotation alors que la surface de came en forme de dent d'engrenage vient sensiblement en contact avec la surface de came en forme de denture. Dans la troisième position, la rotation du loquet entraîne la rotation de la gâche dans le sens de son ouverture et, simultanément, écarte la butée de sécurité de la gâche de son appui sur le corps de verrou.

Le dispositif selon l'invention comprend de préférence au moins deux verrous montés sur une poutre apte à être fixée sur le plancher ou au plafond à l'intérieur de l'hélicoptère. Les moyens de largage comprennent alors un organe de manoeuvre apte à commander une rotation d'un arbre porté par la poutre et sur lequel sont fixés les loquets de chacun des verrous.

En outre, afin de pouvoir éviter le largage de l'une des cordes, par exemple dans le cas où un homme resterait accroché à celle-ci, chacun des verrous comprend avantageusement un moyen de non ouverture, normalement neutralisé, actionnable individuellement.

Un mode de réalisation préféré de l'invention, ainsi qu'une variante de ce mode de réalisation, vont à présent être décrits, à titre d'exemples non limitatifs, en se référant aux dessins annexés, dans lesquels :
- la figure 1 est une vue en perspective représentant une installation de cordage conforme à l'invention, montée à l'intérieur d'un hélicoptère sur le plancher de cabine ;
- la figure 2 est une vue en coupe transversale de l'un des verrous du dispositif d'accrochage illustré sur la figure 1, ce verrou étant représenté dans sa position fermée et verrouillée ;
- la figure 3 est une vue en coupe comparable à la figure 2 représentant le verrou dans sa position fermée avec sécurité déverrouillée ;
- la figure 4 est une vue en coupe comparable aux figures 2 et 3 représentant le verrou dans sa position ouverte de largage de la corde ;
- la figure 5 est une vue en coupe longitudinale représentant l'un des verrous et le mécanisme qui en commande l'actionnement ;
- la figure 6 est une vue en coupe transversale partielle de l'un des verrous illustrant une variante de réalisation dans laquelle un moyen de non ouverture est associé à ce verrou, ce moyen de non ouverture étant représenté dans sa position normale escamotée ;
- la figure 7 est une vue en coupe comparable à la figure 6 représentant le moyen de non ouverture dans sa position d'obturation, le verrou étant fermé ; et
- la figure 8 est une vue comparable aux figures 6 et 7 représentant le moyen de non ouverture dans sa position d'obturation, après commande de l'ouverture du verrou.

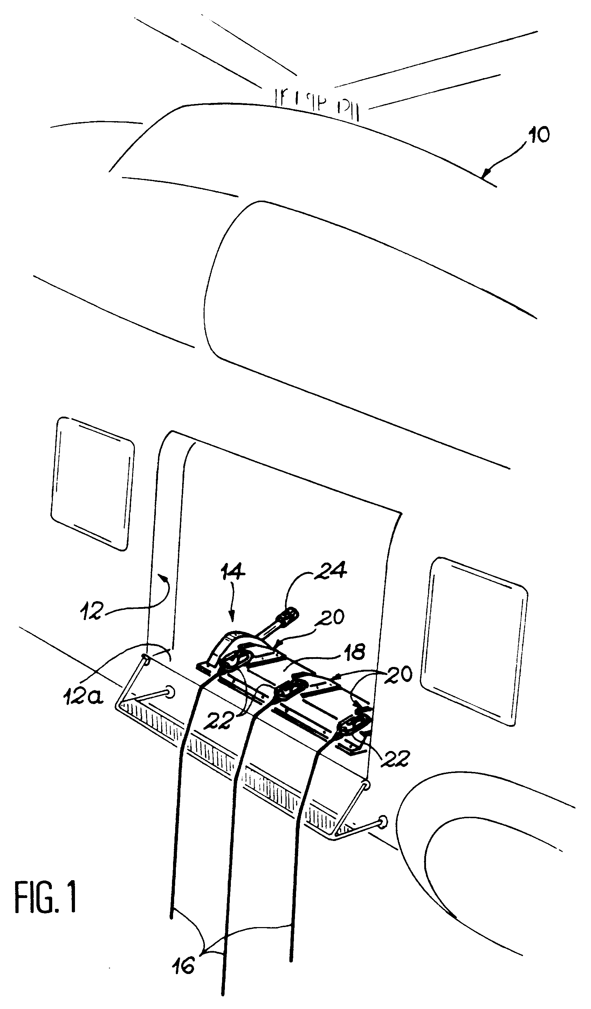

Sur la figure 1, la référence 10 désigne de façon générale un hélicoptère dont une ouverture ou porte latérale est illustrée en 12.

On a également représenté sur la figure 1 une installation de cordage 14 par laquelle une ou plusieurs cordes d'intervention 16 peuvent être accrochées à l'intérieur de l'hélicoptère 10, de façon à pendre par l'ouverture 12. L'installation 14 peut être fixée au plafond de l'hélicoptère ou sur le plancher de celui-ci, comme l'illustre la figure 1.

De façon plus précise, l'installation de cordage 14 comprend un socle en forme de poutre 18, fixé au plancher de l'hélicoptère 10 à proximité de l'ouverture 12, de telle sorte que l'axe longitudinal de la poutre 18 soit sensiblement parallèle au bord inférieur 12a de l'ouverture 12. Un ensemble mécanique autonome est intégré à la poutre 18. Cet ensemble comporte autant de verrous 20 qu'on désire y accrocher de cordes 16. Ainsi, et uniquement à titre d'exemple, on a représenté sur la figure 1, le cas d'une poutre dans laquelle sont montés trois verrous 20 auxquels sont suspendues trois cordes 16. Afin d'assurer leur accrochage sur les verrous 20, chacune des cordes 16 est munie à son extrémité d'un anneau rigide 22.

Conformément à l'invention, l'ensemble mécanique de l'installation 14 comprend de plus des moyens permettant de commander le largage instantané et simultané de chacune des cordes 16 qui y sont accrochées. Ces moyens de largage, qui seront décrits plus en détail par la suite, sont commandés par un organe de manoeuvre constitué par un levier 24 muni d'une poignée dans le mode de réalisation représenté. Ce levier 24 est placé à une extrémité de la poutre 18 et agit simultanément sur chacun des verrous 20 par un mécanisme approprié.

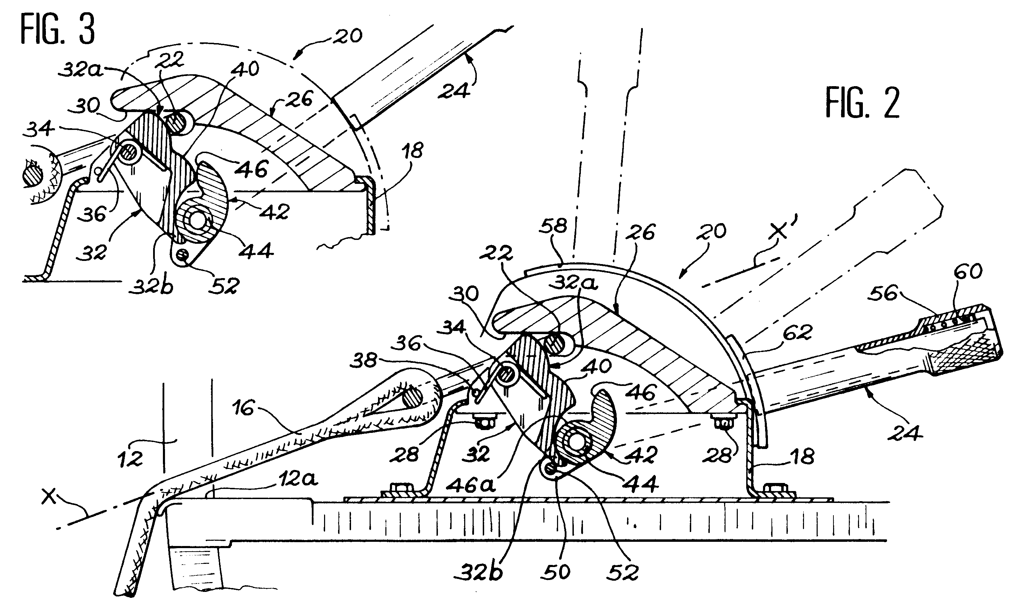

Etant donné que tous les verrous 20 sont identiques, seul l'un d'entre eux va à présent être décrit en se référant tout d'abord à la figure 2.

Sur cette figure, on voit que chacun des verrous 20 comporte un corps 26, fixé sur la poutre 18 par exemple par des vis 28. Ce corps 26 comporte une fente 30 orientée sensiblement parallèlement au plancher de l'hélicoptère et ouverte du côté de l'ouverture 12.

Dans sa partie située en dessous de la fente 30, le corps 26 comporte un évidement dans lequel une gâche 32 est montée pivotante autour d'un axe 34. Cet axe 34 est orienté parallèlement à l'axe longitudinal de la poutre 18 et situé à proximité de l'extrémité ouverte de la fente 30 et en dessous de celle-ci. Un ressort de torsion 36, monté sur l'axe 34 dans un évidement de la gâche 32, prend appui par l'une de ses extrémités sur une tige 38 fixée sur le corps 26 et par son extrémité opposée sur la gâche 32, de façon à solliciter normalement cette dernière vers une position fermée, illustrée sur la figure 2. Dans cette position fermée de la gâche 32, une partie supérieure de cette dernière est très proche du bord supérieur de la fente 30, à proximité de l'extrémité ouverte de celle-ci, afin d'obturer cette extrémité.

De façon plus précise, la partie de la gâche 32 qui vient obturer l'extrémité ouverte de la fente 30 dans la position fermée de la gâche présente approximativement la forme d'un triangle dont l'un des sommets vient tangenter contre le bord supérieur de la fente 30. Le côté de ce triangle tourné vers l'extérieur de la fente forme une rampe qui permet d'insérer l'anneau d'extrémité 22 de la corde 16. En effet, lorsque l'anneau 22 vient en appui contre ce côté lors de son introduction dans la fente 30, l'inclinaison de ce côté engendre un moment qui a pour effet de faire pivoter la gâche 32 à l'encontre du ressort 36, dans le sens des aiguilles d'une montre en considérant la figure 2, et de laisser passer l'anneau qui peut alors atteindre le fond de la fente 30.

Par ailleurs, lorsque l'anneau 22 est emprisonné entre le bord 32a de la partie triangulaire de la gâche 32 qui obture normalement l'extrémité ouverte de la fente et qui a sensiblement la forme d'un arc de cercle centré sur l'axe 34 et le fond de la fente 30, la ligne XX' (figure 2) d'application d'effort de l'anneau sur la gâche, qui joint le point d'appui de l'anneau 22 au bord inférieur 12a de l'ouverture 12 sur lequel prend appui le câble 16, passe à une faible distance de l'axe géométrique de l'axe 34, au-dessus de celui-ci. Par conséquent, l'application d'un effort selon cette ligne XX', due par exemple au poids d'un homme suspendu à la corde 16, tend à faire pivoter la gâche 32 vers sa position de fermeture. Une sécurité est ainsi assurée, même dans le cas où le ressort 36 serait défaillant.

D'une façon plus générale, dans le cas où l'axe de la corde 16 est différent de la ligne XX', la résultante d'appui de l'anneau 22 sur le bord courbe 32a de la gâche 32 se trouve toujours orientée par rapport à l'axe de rotation de la gâche de telle sorte que le moment de cette résultante par rapport audit axe de rotation de la gâche tende à faire tourner celle-ci dans le sens de sa fermeture et crée ainsi un effet auto-bloquant compensant toute défaillance éventuelle du ressort de rappel 36. Cet effet peut aussi être accentué en ne faisant pas coïncider le centre de rotation de la gâche 32 avec le centre de courbure du bord courbe 32a d'appui de l'anneau 22.

En outre, étant donné que la distance entre la ligne XX' d'application d'effort et l'axe géométrique de l'axe 34 est très faible, le moment de rotation exercé dans le sens de la fermeture de la gâche est suffisamment faible pour qu'il soit possible de faire pivoter la gâche 32 en sens inverse, sans exercer sur elle un effort d'actionnement trop important.

Le bord de la partie triangulaire de la gâche sur lequel vient en appui l'anneau 22 se prolonge vers le bas sous la forme d'une surface de came 40 en forme de denture, dont l'extrémité inférieure est formée sur une partie effilée 32b formant bossage d'appui de sécurité de la gâche 32 en position fermée.

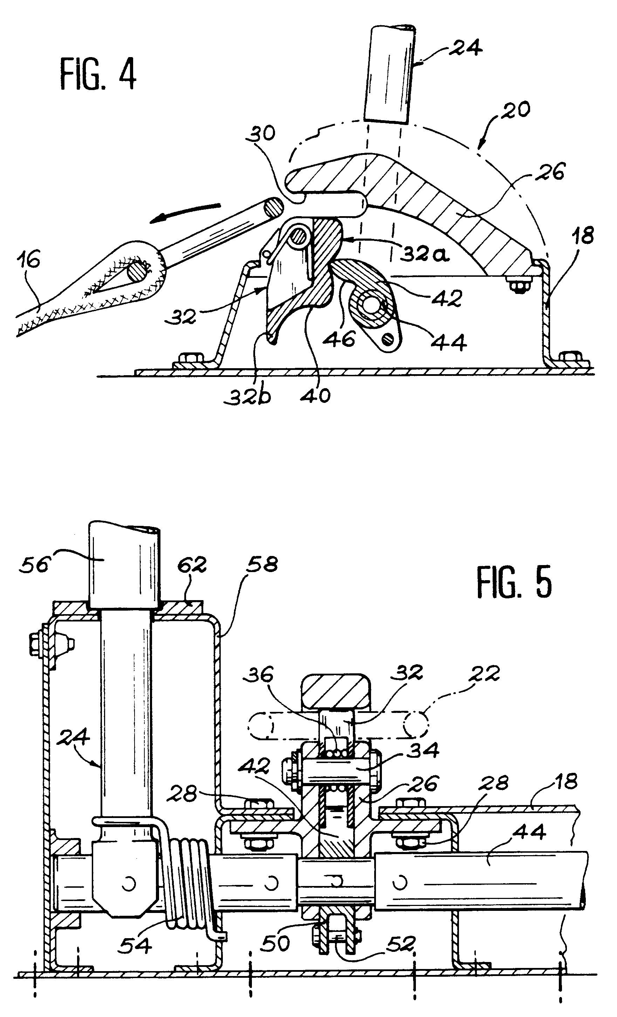

Chacun des verrous 20 comprend de plus un loquet 42, monté pivotant dans le corps 26 autour d'un axe parallèle à l'axe 34 et en face de la surface de came 40 en forme de denture de la gâche 32. L'axe de pivotement de chacun des loquets 42 est matérialisé par un arbre 44 s'étendant sur toute la longueur de la poutre 18, la poignée de manoeuvre 24 étant fixée à une extrémité de l'arbre 44, comme l'illustre la figure 5.

Dans sa partie tournée vers la surface de came 40 de la gâche 32, le loquet 42 comporte une surface de came 46, en forme de dent d'engrenage, complémentaire de la surface de came 40 en forme de denture. La surface de came 46 formée sur le loquet 42 comprend une partie inférieure cylindrique 46a centrée sur l'axe géométrique de l'arbre 44. Cette partie cylindrique 46a est en permanence en contact avec une partie inférieure concave de la surface de came 40 en forme de denture formée sur la gâche 32.

Dans la partie inférieure cylindrique 46a, le loquet 42 comporte une partie fourchue 50 portant à son extrémité une tige de verrouillage de sécurité 52 parallèle à l'axe de pivotement du loquet.

Lorsque le loquet 42 occupe une première position de verrouillage illustrée sur la figure 2, la partie effilée 32b de la gâche 32 pénètre dans la partie fourchue 50 du loquet 42 et se trouve emprisonnée entre la partie cylindrique 46a et la tige 52. Tout pivotement de la gâche 32 autour de son axe 34 est alors impossible. Cette première position du loquet 42 constitue donc une position de verrouillage de sécurité de la gâche 32 dans sa position fermée.

Dans cette première position du loquet 42, on voit également sur la figure 2 que la partie supérieure de la surface de came 46, en forme de dent d'engrenage, du loquet 42 est espacée de la partie correspondante de la surface de came 40, en forme de denture, de la gâche 32.

Comme le montre la figure 3, une première rotation du loquet 42 autour de son axe a pour effet d'amener la partie supérieure de la surface de came 46, en forme de dent d'engrenage, au contact de la partie supérieure de la surface de came 40, en forme de denture. Cette première rotation du loquet n'entraîne aucun pivotement de la gâche 32 autour de son axe 34. Lorsque cette deuxième position du loquet 42 est atteinte, la partie effilée 32b de la gâche 32 se trouve dégagée de la tige de verrouillage de sécurité 52, de telle sorte qu'un pivotement de la gâche autour de son axe, dans le sens des aiguilles d'une montre en considérant la figure 2, est alors possible. Cette deuxième position du loquet 42 correspond par conséquent à une position d'attente, dans laquelle la gâche 32 occupe toujours sa position fermée, mais dans laquelle il est possible d'introduire l'anneau 22 dans la fente 30 en faisant pivoter la gâche 32 à l'encontre de l'action du ressort 36.

Lorsque le pivotement du loquet 42 dans le sens inverse des aiguilles d'une montre est poursuivi au-delà de la deuxième position comme illustré sur la figure 3, la coopération de la surface de came 46, en forme de dent d'engrenage, avec la surface de came 40, en forme de denture, a pour effet de faire pivoter la gâche 32 dans le sens des aiguilles d'une montre à l'encontre de l'action du ressort 36 et des efforts de frottement de l'anneau 22 sur la surface 32a de la gâche 32. Lorsque ce pivotement atteint son amplitude maximale, la gâche 32 occupe une position ouverte, illustrée sur la figure 4, dans laquelle l'extrémité ouverte de la fente 30 est totalement dégagée. Un largage instantané de la corde 16 accrochée au verrou 20 est alors obtenu. Cette position est représentée sur la figure 4.

Le pivotement simultané de chacun des loquets 42 entre les trois positions représentées respectivement sur les figures 2, 3 et 4 est commandé en agissant sur le levier de manoeuvre 24.

Comme l'illustre la figure 5, ce levier de manoeuvre 24 est rappelé vers la position correspondant à la première position des loquets 42 par un ressort de torsion 54 placé autour de l'arbre 44 et dont les extrémités prennent appui respectivement sur le levier 24 et sur la poutre 18.

Comme l'illustre en particulier la figure 2, dans sa partie apte à être saisie par l'opérateur, le levier de manoeuvre 24 comporte une poignée prolongée par un fourreau coulissant 56 sollicité par un ressort de compression 60 vers un guide 58 monté sur la poutre 18. Une empreinte 62 portée par le guide 58 empêche tout pivotement du levier 24 entre la première et la deuxième positions du loquet 42, et inversement, tant que l'opérateur ne tire pas vers lui la poignée prolongée par un fourreau coulissant 56 à l'encontre du ressort 60. Lorsque les loquets 42 se trouvent dans leur première position, assurant un verrouillage de sécurité de l'ensemble des gâches 32 du dispositif, cet agencement constitue une sécurité supplémentaire évitant tout largage intempestif des cordes 16 dû à une manoeuvre accidentelle du levier 24.

L'installation de cordage qui vient d'être décrite en se référant aux figures 1 à 5 permet d'accrocher à l'intérieur d'un hélicoptère une ou plusieurs cordes 16 le long desquelles un personnel d'intervention peut descendre jusqu'au sol alors que l'hélicoptère est en vol stationnaire à environ 30 mètres au-dessus du sol. De plus, le mécanisme décrit permet au chef de mission, resté à bord de l'hélicoptère, de larguer simultanément toutes les cordes 16 accrochées à l'installation, en agissant sur le levier 24, dès que le dernier homme a atteint le sol. Il est alors possible à l'hélicoptère de quitter très rapidement le lieu d'intervention sans risquer qu'une ou plusieurs des cordes ne viennent se placer dans les rotors ou dans les obstacles au sol.

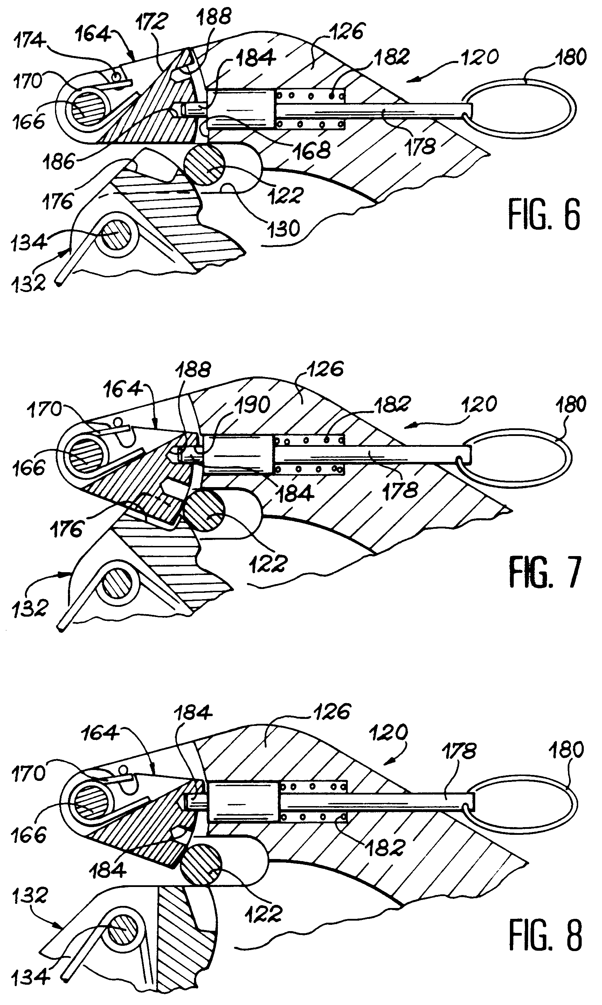

Dans une variante de réalisation qui va à présent être décrite en se référant aux figures 6 à 8, l'installation comporte en outre, sur chacun des verrous, un mécanisme additionnel permettant éventuellement de ne pas larguer la corde fixée à ce verrou lors du largage simultané de toutes les cordes de l'installation. Ce mécanisme de non largage peut notamment être utile dans le cas où un homme resterait accroché à sa corde, pour une raison quelconque, alors que le largage des autres cordes serait souhaitable.

Dans cette variante de réalisation, les éléments identiques à ceux qui ont été décrits précédemment en se référant aux figures 1 à 5 sont désignés par les mêmes chiffres de référence, augmentés de 100.

Dans la variante de réalisation illustrée sur les figures 6 à 8, chacun des verrous 120 comprend une deuxième gâche 164, montée pivotante sur le corps 126 par un axe 166 parallèle à l'axe de pivotement 134 de la gâche 132 et située de l'autre côté de la fente 130 par rapport à cet axe 134. De façon plus précise, l'axe 166 est situé à proximité de l'extrémité ouverte de la fente 130 et la deuxième gâche 164 est logée dans un évidement 168 formé dans le corps 126, en face de la gâche 132.

Un ressort de torsion 170, en roulé sur une partie de l'axe 166 située dans une encoche 172 formée dans ta gâche 164, prend appui par une première extrémité sur une tige 174 solidaire du corps 126, et par son extrémité opposée dans le fond de l'encoche 172. Le ressort 170 tend ainsi à faire pivoter la gâche 164 dans le sens des aiguilles d'une montre en considérant la figure 6, vers une position d'obturation de l'extrémité ouverte de la fente 130, représentée sur les figures 7 et 8. Dans cette position d'obturation, la partie basse de la gâche 164 est partiellement reçue dans une partie en creux 176 formée à cet effet dans la gâche 132, lorsque cette dernière occupe elle-même sa position d'obturation de l'extrémité ouverte de la fente 130.

La deuxième gâche 164 occupe normalement une position escamotée, illustrée sur la figure 6 dans laquelle cette gâche est totalement escamotée dans le corps 126, de façon à dégager l'entrée de la fente 130.

Le mécanisme de non ouverture des verrous 120 illustré sur les figures 6 à 8 comprend également une tirette 178 de commande individuelle, qui coulisse dans le corps 126 selon une direction orthogonale aux axes 134 et 166 et sensiblement parallèle à la fente 130. La manoeuvre de la tirette 178 est réalisée grâce à un anneau 180 monté sur son extrémité située à l'extérieur du corps 126. Un ressort hélicoïdal de compression 182 dont les extrémités sont respectivement en appui sur le corps 126 et sur un épaulement formé sur la tirette 178, sollicite un pion 184 constituant l'extrémité de la tirette 178 contre la surface en vis-à-vis de la deuxième gâche 164. Le pion 184 peut ainsi pénétrer dans un trou 186 ou dans un trou 188 formé sur cette surface, selon que la deuxième gâche 164 occupe sa position normale escamotée ou sa position d'obturation.

Ainsi, comme l'illustre la figure 6, le pion 184 est normalement engagé dans le trou 186 sous l'action du ressort 182, de telle sorte que la gâche 164 soit normalement maintenue dans sa position escamotée, pour laquelle le fonctionnement du verrou 120 est totalement identique à celui qui a été décrit précédemment en se référant aux figures 1 à 5.

Si, pour une raison quelconque, le chef de mission décide de ne pas larguer une ou plusieurs des cordes suspendues aux verrous 120, il actionne la tirette 178 du ou des verrous 120 correspondants en tirant sur l'anneau 180. Sous l'effet de cette traction, le pion 184 sort du trou 186 et la gâche 164 pivote alors automatiquement dans sa position d'obturation illustrée sur la figure 7, sous l'action du ressort 170.

Lorsque le pion 184 se trouve en face du trou 188, il vient heurter une partie en saillie 190 de la gâche 164, de sorte que le pion 184 pénètre automatiquement dans le trou 188, sous l'action du ressort 182, dès que l'opérateur relâche l'anneau 180.

Comme l'illustre la figure 8, lorsque l'opérateur actionne ensuite le levier de manoeuvre, ce qui a pour effet de faire pivoter dans leur position escamotée toutes les gâches 132, le ou les verrous 120 dont les tirettes 178 ont été précédemment actionnées ne libèrent pas les cordes correspondantes, car les anneaux 122 de ces cordes restent emprisonnés dans la fente 130 par la deuxième gâche 164.

Bien entendu, l'invention n'est pas limitée aux modes de réalisation qui viennent d'être décrits à titre d'exemples, mais en couvre toutes les variantes sans sortir du cadre des revendications qui suivent. Ainsi, le verrouillage des gâches en position d'obturation par un élément de verrouillage porté par le loquet peut, dans certains cas, être supprimé.

## Revendications

1. Installation de cordage sur hélicoptère, destinée à la descente vers le sol de personnel d'intervention, caractérisée par le fait qu'elle comprend un ensemble mécanique autonome intégré à un socle (18), lui-même fixé de façon amovible à un élément structural interne de la cabine de l'hélicoptère, en regard d'une ouverture latérale (12), cet ensemble mécanique autonome comportant des moyens (20) d'accrochage rapide d'au moins un anneau (22) solidaire de l'extrémité supérieure d'une corde (16), et des moyens (24) de largage instantané commandé de chaque anneau (22), les moyens d'accrochage rapide comprenant au moins un verrou d'accrochage (20) comportant :
- un corps (26) apte à être fixé sur le socle (18) ;
- une fente (30) formée dans ce corps et dont une extrémité ouverte est apte à être tournée vers l'ouverture latérale (12) de l'hélicoptère, pour recevoir l'anneau d'extrémité (22) d'une corde (16) sortant par ladite ouverture ;
- une gâche (32) montée pivotante sur le corps (26) par un premier axe (34), de façon à pouvoir occuper une position fermée dans laquelle la gâche, en appui sur une partie fixe du verrou, obture l'extrémité ouverte de la fente et une position ouverte, commandée, dans laquelle cette extrémité ouverte est dégagée, le bord de la gâche (32) tournée vers l'extérieur de la fente (30) étant conformé de telle sorte que l'anneau (22) d'extrémité de la corde peut être introduit dans la fente en déplaçant ta gâche à l'encontre de moyens élastiques (36), qui maintiennent normalement la gâche dans sa position fermée ; et
- un loquet (42) monté pivotant sur le corps (26) par un deuxième axe (44) et comportant une surface de came (46) qui coopère avec une surface de came complémentaire (40) formée sur la gâche de telle sorte que, sous la rotation du loquet (42) solidaire en rotation d'un levier (24) de commande de largage, formant les moyens de largage, la gâche pivote de sa position de fermeture vers sa position d'ouverture et libère l'anneau (22).

2. Installation selon la revendication 1, caractérisée par le fait que le levier de commande de largage (24) peut occuper une première position de verrouillage de la gâche (32) dans sa position fermée, une deuxième position dans laquelle la gâche est déverrouillée et occupe toujours sa position fermée, et une troisième position dans laquelle la gâche est en position ouverte.

3. Installation selon l'une quelconque des revendications 1 et 2, caractérisée par le fait que le premier axe (34) de pivotement de la gâche (32) est situé à proximité de l'extrémité ouverte de la fente (30) et à proximité d'une ligne (XX') d'application d'effort de l'anneau sur la gâche, qui est sensiblement la direction de l'extrémité de la corde (16) reliée à l'anneau (22) lorsque ladite corde est tendue par une charge verticale, de telle sorte que l'application d'un effort selon cette ligne tende à faire pivoter la gâche vers sa position de fermeture.

4. Installation selon l'une quelconque des revendications 1 à 3, caractérisée par le fait que la surface de came (46) formée sur le loquet (42) comprend une partie cylindrique (46a) centrée sur le deuxième axe (44) sur laquelle vient en appui l'extrémité d'une partie effilée (32b) de la gâche (32) lorsque ladite gâche est en position fermée et a la forme d'une dent d'engrenage apte à coopérer avec ladite surface de came complémentaire (40), qui est en forme de denture.

5. Installation selon l'une quelconque des revendications précédentes, caractérisée par le fait que l'ensemble mécanique autonome comporte de plus des moyens de sécurité (52) interdisant tout décrochage non commandé de chaque anneau, ces moyens de sécurité comprenant un élément de verrouillage (52) porté par le loquet (42) et qui interdit toute rotation de la gâche (32) à l'encontre des moyens élastiques (36) dans la première position dudit loquet, la surface de came (46) en forme de dent d'engrenage étant a lors, pour l'essentiel, écartée de la surface de came (40) en forme de denture, l'élément de verrouillage (52) libérant la gâche en rotation dans la deuxième position du loquet, dans laquelle la surface de came (46) en forme de dent d'engrenage est en contact avec la surface de came (40) en forme de denture de la gâche (32), pour permettre un pivotement de cette dernière dans le sens de l'ouverture, lors du passage du loquet dans la troisième position.

6. Installation selon l'une quelconque des revendications 1 à 5, caractérisée par le fait qu'elle comprend au moins deux verrous (20) montés dans le socle (18), en forme de poutre, apte à être fixé à l'intérieur de l'hélicoptère.

7. Installation selon la revendication 6, caractérisée par le fait que les loquets (42) de chacun des verrous (20) sont montés sur un arbre (44) porté par la poutre (18), ledit arbre (44) étant solidaire à une de ses extrémités d'un levier (24) de commande de largage.

8. Installation selon l'une quelconque des revendications 6 et 7, caractérisée par le fait que chacun des verrous (120) comprend un moyen de non ouverture (164), normalement neutralisé, actionnable individuellement.

9. Installation selon la revendication 8, caractérisée par le fait que ledit moyen de non ouverture comprend une deuxième gâche (164) montée dans le corps du verrou de façon à pouvoir occuper une position normale escamotée et une position d'obturation de l'extrémité ouverte de la fente (130), de deuxièmes moyens élastiques (70) sollicitant la deuxième gâche dans sa position d'obturation, et un organe de commande individuelle (178) coopérant avec la deuxième gâche pour la maintenir normalement dans sa position escamotée.

10. Installation selon l'une quelconque des revendications 1, 3, 4 et 5, combinée avec la revendication 9, caractérisée par le fait que l'organe de commande individuelle est une tirette (178) dont l'extrémité (184) pénètre dans un trou (186) de la deuxième gâche (164), sous l'action de troisièmes moyens élastiques (182) lorsque cette dernière est en position escamotée, la deuxième gâche étant montée pivotante dans le corps (126) du verrou par un troisième axe (166) situé à proximité de l'extrémité ouverte de la fente, du côté opposé au premier axe par rapport à cette fente.

11. Installation selon l'une quelconque des revendications 7 à 10, combinée avec la revendication 2, caractérisée par le fait que l'organe de manoeuvre (24) est rappelé vers sa position correspondant à la première position de verrouillage de la gâche de chaque verrou par des quatrièmes moyens élastiques (54).

12. Installation selon l'une quelconque des revendications 7 à 11, combinée avec la revendication 2, caractérisée par le fait que l'organe de manoeuvre (24) comprend une pièce de verrouillage (56) qui doit être actionnée pour commander un passage de la gâche de chaque verrou de sa première position dans sa deuxième position, et inversement.

## Claims

1. Rope installation on a helicopter for lowering to the ground intervention personnel, characterized in that it comprises an autonomous mechanical assembly integrated into a base (18),
which is detachably fixed to a structural member within the helicopter cockpit facing a lateral opening (12), said autonomous mechanical assembly incorporating fast attachment means (20) of at least one ring (22) integral with the upper end of a rope (16), together with controlled instantaneous release means (24) of each ring (22), in which the fast attachment means incorporate at least one attachment bolt (20) comprising:
a body (26) which can be fixed to the base (18),
a slot (30) formed in said body and whereof one open end can be turned towards the lateral opening (12) of the helicopter, in order to receive the end ring (22) of a rope (16) passing out through said opening,
a clasp (32) mounted so as to pivot on the body (26) by a first spindle (34), so that it can occupy a closed position in which the clasp, bearing on a fixed portion of the bolt, closes the open end of the slot and an open, controlled position, in which said open end is freed, the edge of the clasp (32) turned towards the outside of the slot (30) being shaped in such a way that the end ring (22) of the cord can be introduced into the slot by moving the clasp in opposition to elastic means (36),
which normally maintain the clasp in its closed position and a latch (42) mounted so as to pivot on the body (26) by a second spindle (44) and having a cam surface (46) which cooperates with a complimentary cam surface (40) formed on the clasp in such a way that, under the rotation of the latch (42) which is integral in rotation with a release control lever (24) forming the release means, the clasp pivots from its closed position to its open position and frees the ring (22).

2. Installation according to claim 1, characterized in that the release control lever (24) can occupy a first position locking the clasp (32) in its closed position, a second position in which the clasp is unlocked and still occupies its closed position and a third position in which the clasp is in the open position.

3. Installation according to either of the claims 1 and 2, characterized in that the first pivoting spindle (34) of the clasp (32) is located in the vicinity of the open end of the slot (30) and in the vicinity of a line (XX') for applying a force from the ring to the clasp, which is essentially the direction of the end of the rope (16) connected to the ring (22) when said rope is held taut by a vertical load, so that the application of a force along said line tends to pivot the clasp towards its closed position.

4. Installation according to any one of the claims 1 to 3, characterized in that the cam surface (46) formed on the latch (42) has a cylindrical portion (46a) centred on the second spindle (44) on which bears the end of a tapered portion (32b) of the clasp (32), when the latter is in the closed position and which is shaped like a gear tooth able to cooperate with said complimentary cam surface (40), which is shaped like a tooth system.

5. Installation according to any one of the preceding claims, characterized in that the autonomous mechanical assembly also has safety means (52) preventing any uncontrolled detachment of each ring, said safety means having a locking member (52) carried by the latch (42) and which prevents any rotation of the clasp (32) in opposition to elastic means (36) in the first position of said latch, the gear tooth-shaped cam surface (46) then essentially being spaced from the tooth system-shaped cam surface (40), the locking member (52) releasing the clasp in rotation in the second position of the latch, in which the gear tooth-shaped cam surface (46) is in contact with the tooth system-shaped cam surface (40) of the clasp (32), so as to allow a pivoting of the latter in the open direction, during the passage of the latch into the third position.

6. Installation according to any one of the claims 1 to 5, characterized in that it comprises at least two bolts (20) mounted in the base (18), in the form of a beam, which can be fixed to the interior of the helicopter.

7. Installation according to claim 6, characterized in that the latches (42) of each of the bolts (20) are mounted on a shaft (44) carried by the beam (18), said shaft (44) being rendered integral at one of its ends with a release control lever (24).

8. Installation according to either of the claims 6 and 7, characterized in that each of the bolts (120) comprises a non-opening means (164), which is normally neutralized and which is individually operable.

9. Installation according to claim 8, characterized in that said non-opening means (164) comprises a second clasp mounted in the bolt body in such a way as to occupy a normal retracted position and a position closing the open end of the sot (130), second elastic means (7) moving the second clasp into its closing position, and an individual control member (178) cooperating with the second clasp to maintain it normally in its retracted position.

10. Installation according to any one of the claims 1, 3, 4 and S combined with claim 9, characterized in that the individual control member is a pull handle (178), whose end (184) penetrates a hole (186) of the second clasp (164) under the action of third elastic means (182) when the latter is in the retracted position, the clasp being mounted so as to pivot in the body (126) of the bolt by a third spindle (166) located in the vicinity of the open end of the slot, on the side opposite to the first spindle with respect to said slot.

11. Installation according to any one of the claims 7 to 10 combined with claim 2, characterized in that the operating member (24) is drawn back towards its position corresponding to the first locking position of the clasp of each bolt by fourth elastic means (54).

12. Installation according to any one of the claims 7 to 11 combined with claim 2, characterized in that the operating member (24) comprises a locking part (56), which has to be operated to control a passage of the clasp of each bolt from its first position to its second position and vice-versa.

## Patentansprüche

1. Seilanlage auf einem Hubschrauber, bestimmt zum Abseilen von Einsatzpersonal auf den Boden,
**dadurch gekennzeichnet,** daß sie eine eigenständige mechanische Einheit umfaßt, integriert in einen Sockel (18), seinerseits selbst beweglich montiert auf einem Innenstrukturelement der Hubschrauberkabine, einer Seitenöffnung (12) gegenüberstehend, wobei diese eigenständige mechanische Einheit Schnelleinhängeinrichtungen (20) für wenigstens einen Ring (22) umfaßt, der fest verbunden ist mit dem oberen Ende eines Seils (16), und gesteuerte Momentanabwurfeinrichtungen für jeden Ring (22), und die Schnelleinhängeinrichtungen wenigstens einen Einhängverschluß (20) enthalten,
umfassend:
- ein Körper (26), geeignet auf dem Sockel (18) befestigt zu werden;
- einen Schlitz (30), ausgebildet in diesem Körper, von dem ein offenes Ende gegen die seitliche Öffnung (12) des Hubschraubers gedreht werden kann, um den Endring (22) eines Seils (16) aufzunehmen, das aus besagter Öffnung austritt;
- einen Schließhaken (32), schwenkbar um eine erste Achse (34) auf dem Körper (26) angebracht, so daß er eine geschlossene Stellung einnehmen kann, in der der Schließhaken, sich abstützend auf einem feststehenden Teil des Verschlusses, das offene Ende des Schlitzes verschließt, und eine offene Stellung, gesteuert, in der dieses offene Ende freigegeben wird, wobei der Rand des Schließhakens (32), der gegen das Äußere des Schlitzes (30) gedreht ist, so geformt ist, daß der Endring (22) des Seils eingeführt werden kann in den Schlitz durch Verschieben des Schließhakens gegen die Wirkung von elastischen Einrichtungen (36), die den Schließhaken normalerweise in seiner geschlossenen Stellung halten; und
- eine Fallklinke (42), schwenkbar auf dem Körper (26) befestigt durch eine zweite Achse (44) und eine Kurvenfläche (46) aufweisend, die zusammenwirkt mit einer komplementären Kurvenfläche (40), so auf dem Schließhaken ausgebildet, daß bei Drehung des Fallriegels (42), auf Drehung verbunden mit einem Abwurfbetätigungshebel (24), die Abwurfeinrichtungen bildend, der Schließhaken aus seiner Verschlußstellung in seine Öffnungsstellung schwenkt und den Ring (22) freigibt.

2. Anlage nach Anspruch 1, dadurch gekennzeichnet, daß der Abwurfbetätigungshebel (24) eine erste Verriegelungsstellung des Schließhakens (32) einnehmen kann in seiner geschlossenen Stellung, eine zweite Stellung, bei der der Schließhaken entriegelt ist und noch immer seine geschlossene Stellung einnimmt, und eine dritte Stellung, bei der der Schließhaken in seiner geöffneten Stellung ist.

3. Anlage nach einem der Ansprüche 1 und 2, dadurch gekennzeichnet, daß die erste Schwenkachse (34) des Schließhakens (32) sich in der Nähe des offenen Endes des Schlitzes (30) befindet und in der Nähe einer Linie (XX') des Verlaufs der Kraftausübung des Rings auf den Schließhaken, im wesentlichen der Richtung des mit dem Ring (22) verbundenen Ende des Seils (16) entsprechend, wenn das Seil gespannt ist durch eine Vertikallast, so daß die Ausübung einer Kraft entsprechend dieser Linie dazu tendiert, den Schließhaken in seine Verschlußstellung zu schwenken.

4. Anlage nach einem der Ansprüche 1 bis 3, dadurch gekennzeichnet, daß die auf dem Fallriegel (42) ausgebildete Kurvenfläche (46) einen zylindrischen Teil 46a umfaßt, zentriert auf die zweite Achse (44), auf dem sich das Ende eines spitz zulaufenden Teils (32b) des Schließhakens (32) abstützt, wenn der Schließhaken in geschlossener Stellung ist, und die Form eines Getriebezahns hat, geeignet zusammenzuwirken mit der genannten komplementären Kurvenfläche (40), die Verzahnungsform aufweist.

5. Anlage nach einem der vorhergehenden Ansprüche, dadurch gekennzeichnet, daß diese eigenständige mechanische Einheit außerdem Sicherheitseinrichtungen (52) umfaßt, die jedes nichtgesteuerte Aushängen jedes Rings verhindern, wobei diese Sicherheitseinrichtungen ein Verriegelungselement (52) umfassen, getragen durch den Fallriegel (42), der jede Drehung des Schließhakens (32) gegen die elastischen Einrichtungen (36) verhindert in der ersten Stellung des besagten Fallriegels, wobei die getriebezahnförmige Kurvenfläche (46) dann im wesentlichen beabstandet ist von der verzahnungsförmigen Kurvenfläche (40) und das Verriegelungselement (52) den Schließhaken auf Drehung freigibt in die zweite Stellung des Fallriegels, in der die getriebezahnförmige Kurvenfläche (46) in Kontakt ist mit der verzahnungsförmigen Kurvenfläche (40) des Schließhakens (32), um ein Schwenken dieses letzteren in Richtung Öffnung zu ermöglichen beim Übergang des Fallriegels in seine dritte Stellung.

6. Anlage nach einem der Ansprüche 1 bis 5, dadurch gekennzeichnet, daß sie wenigstens zwei Verschlüsse (20) umfaßt, angebracht im trägerförmigen Sockel (18), geeignet im Innern des Hubschraubers befestigt zu werden.

7. Anlage nach Anspruch 6, dadurch gekennzeichnet, daß die Fallriegel (42) jedes Verschlusses (20) auf eine Welle (44) montiert sind, getragen durch den Träger (18), wobei die Welle (44) an einem ihrer Enden fest verbunden ist mit einem Abwurfbetätigungshebel (24).

8. Anlage nach einem der Ansprüche 6 und 7, dadurch gekennzeichnet, daß jeder der Verschlüsse (120) eine Nichtöffnungseinrichtung (164) umfaßt, normalerweise neutralisiert, individuell zu betätigen.

9. Anlage nach Anspruch 8, dadurch gekennzeichnet, daß die genannten Nichtöffnungseinrichtungen einen zweiten Schließhaken (164) umfassen, so im Körper des Verschlusses angeordnet, daß er eine versenkte Normalstellung einnehmen kann und eine Verschlußstellung des offenen Endes des Schlitzes (130), wobei zweite elastische Einrichtungen (70) den zweiten Schließhaken in seiner Verschlußstellung belasten, und ein individuelles Betätigungsorgan (178), das zusammenwirkt mit dem zweiten Schließhaken, um ihn normalerweise in seiner versenkten Stellung zu halten.

10. Anlage nach einem der Ansprüche 1, 3, 4 und 5, zusammen mit dem Anspruch 9, dadurch gekennzeichnet, daß das individuelle Betätigungsorgan eine Zugstange (178) ist, deren Ende (184) unter der Wirkung von dritten elastischen Einrichtungen (182) eindringt in ein Loch (186) des zweiten Schließhakens (164), wenn dieser letztere in versenkter Stellung ist, wobei der zweite Schließhaken schwenkbar im Körper (126) des Verschlusses angebracht ist mittels einer dritten Achse (166), in der Nähe des offenen Endes des Schlitzes befindlich, auf der zur ersten Achse entgegengesetzten Seite, bezogen auf diesen Schlitz.

11. Anlage nach einem der Ansprüche 1 bis 10, zusammen mit dem Anspruch 2, dadurch gekennzeichnet, daß das Betätigungsorgan (24) durch vierte elastische Einrichtungen (54) zurückgestellt wird in seine der ersten Verriegelungsstellung des Schließhakens jedes Verschlusses entsprechende Stellung.

12. Anlage nach einem der Ansprüche 1 bis 11, zusammen mit dem Anspruch 2, dadurch gekennzeichnet, daß das Betätigungsorgan (24) ein Verriegelungsteil (56) umfaßt, das betätigt werden muß, um einen Übergang des Schließhakens jedes Verschlusses aus seiner ersten Stellung in seine zweite Stellung zu bewirken, und umgekehrt.
